# EUROPEAN PATENT SPECIFICATION

(11) **EP 2 853 473 B1**
(45) Date of publication and mention of the grant of the patent: **27.07.2016**
(21) Application number: 14185723.5
(22) Date of filing: 22.09.2014
(51) Int. Cl.: B62J 6/18, B60R 16/02

(54) **Cable wiring structure of electric component in saddle-ride type vehicle**
Kabelanbindung einer elektrischen Komponente in einem Sattelfahrzeug
Câblage d'un composant électrique dans un véhicule à selle

(30) Priority: 26.09.2013 JP 2013199474
(43) Date of publication of application: 01.04.2015
(73) Proprietor: Honda Motor Co., Ltd., Tokyo 107-8556 (JP)
(72) Inventor: Inose, Koji, Saitama 351-0193 (JP); Yoshimura, Kazunori, Saitama 351-0193 (JP)
(74) Representative: Brevalex

(56) References cited:
- CN-Y- 201 037 032
- JP-A- H06 115 473
- JP-A- 2009 161 011
- JP-A- 2009 238 472
- JP-A- 2011 046 278

## Description

### [Technical Field]

The present invention relates to a cable wiring structure of an electric component in a saddle-type vehicle such as a motorcycle (see JP 2011046278A).

### [Background Art]

In a motorcycle, the end of a handlebar is provided with a brake lever and a clutch lever for operating a brake and a clutch. A holder for holding the brake lever and the clutch lever is provided with a detection sensor or the like for detecting the operating state of the levers. Further, a switch box for operating an engine starter, blinkers, a headlight, a horn and the like is provided in the vicinity of the brake lever and the clutch lever.

Each one end of a plurality of cables is connected to various kinds of operation switches provided in the switch box. These cables are inserted into a tubular protective material to be collected as one sub-harness.

Further, each one end of the plurality of cables is connected to the detection sensor provided on the holder for the brake lever and the clutch lever as well. These cables are also inserted as one sub-harness into a tubular protective material.

As shown in Patent Literature 1, the sub-harnesses led through from the operation switch and the detection sensor, as described above, are wired to the handlebar center part along the handlebar, and connected to a main harness provided on a body frame.

### [Citation List]

### [Patent Literature]

[Patent Literature 1] JP-A No. 2007-276549

### [Summary of Invention]

### [Technical Problem]

In the related art, however, a plurality of sub-harnesses are wired along a handlebar. Therefore, it is desired that the number of harnesses in the vicinity of the handlebar is decreased to improve the appearance quality and achieve space-saving.

The present invention has been made in the light of the actual circumstances, and it is an object of the invention to provide a cable wiring structure of an electric component in a saddle-type vehicle, which may make a good impression in the vicinity of a handlebar to improve the appearance quality and achieve space-saving in the vicinity of the handlebar.

### [Solution to Problem]

As a solution to the problem, the apparatus of claim 1 is provided. The cable wiring structure of an electric component (50, 80) in a saddle-ride type vehicle (1) in which a plurality of electric components (50, 80) are mounted to a handlebar (10), includes: a main harness (31) fitted to a vehicle body (11); a first electric component (50) mounted to the handlebar (10); a first cable group (101), one end of which is connected to the first electric component (50); a second electric component (80) mounted to the handlebar (10); a holder (60) fixed to the handlebar (10) and supporting the second electric component (80); a second cable group (102), one end of which is connected to the second electric component (80); and a tubular protective member (106) into which the first cable group (101) and the second cable group (102) are inserted, wherein a sub-harness (110) is constituted by the first cable group (101), the second cable group (102), and the protective member (106), and the second cable group (102) is passed through the interior of the first electric component (50) and inserted into the protective member (106) along the first cable group (101).

A feature of the invention described in claim 2 is that, in the cable wiring structure of the electric component in the saddle-ride type vehicle according to claim 1, the second cable group (102) includes the electric component side cable group (102S) at the side of the second electric component (80) and a harness side cable side (102H) at the side of the main harness (31) which are connected to each other through removable connectors (103,104).

A feature of the invention described in claim 3 is that, in the cable wiring structure of the electric component in the saddle-ride type vehicle according to claim 2, the connectors (103, 104) are held on a bracket (70) provided on the holder (60).

A feature of the invention described in claim 4 is that, the cable wiring structure of the electric component in the saddle-ride type vehicle according to claim 3 further includes: a cover member (72) which at least covers the connectors (103, 104), at least a part of the second cable group (102), and the bracket (70).

A feature of the invention described in claim 5 is that, in the cable wiring structure of the electric component in the saddle-ride type vehicle according to claim 4, the holder (60) includes a cover fixing part (63b) for fixing the cover member (72).

A feature of the invention described in claim 6 is that, in the cable wiring structure of the electric component in the saddle-ride type vehicle according to claim 4 or 5, an operating lever (61) is supported on the holder (60), and the cover member (72) covers at least a part of control force transmitting means (71) extending from the operating lever (61) side to transmit the lever control force to the outside.

A feature of the invention described in claim 7 is that, in the cable wiring structure of the electric component in the saddle-ride type vehicle according to any one of claims 1 to 6, the second electric component (80) and the second cable group (102) are provided in two or more pairs.

A feature of the invention described in claim 1 is that the first electric component (50) includes an operation switch (54) operated from the outside, and the second electric component (80) includes detection sensors (81, 82) for detecting the vehicle condition.

A feature of the invention described in claim 8 is that, in the cable wiring structure of the electric component in the saddle-ride type vehicle according to claim 7, the first electric component (50) includes the operation switch (54) at least for operating a horn, switching the beam direction of a headlight, and operating blinkers.

A feature of the invention described in claim 9 is that the handlebar (10) is fitted to a steering shaft (9) for steering a wheel (6), and the sub-harness (110) is connected to the main harness (31) through the vicinity of the steering shaft (9).

### [Advantageous Effects of Invention]

According to the invention described in claim 1, the first cable group and the second cable group are inserted into one protective member and put together into one sub-harness, whereby the appearance quality of the vicinity of the handlebar can be improved. Further, the routing of the second cable group can be made orderly and the number of cables exposed to the vicinity of the handlebar can be decreased so as to improve the appearance quality and achieve space-saving in the vicinity of the handlebar.

According to the invention described in claim 2, the electric component side cable group can be detached from the harness side cable group connected to the main harness by releasing the fitting of the connectors. Therefore, in performing the replacement and the maintenance of the second electric component, the second electric component and the harness side cable group can be easily detached from the vehicle body so that the maintainability can be improved.

According to the invention described in claim 3, the connector in the middle of the second cable is held on the bracket, so that the connector can be surely held, and the second cable group can be positioned and held in the middle. Also in this respect, the appearance quality of the vicinity of the handlebar can be improved.

According to the invention described in claim 4, the cover member for covering the periphery of the connector is provided so that the waterproofness and dust resistance in the connecting part of the connectors can be enhanced, and the appearance quality can be improved.

According to the invention described in claim 5, the holder includes the cover fixing part for fixing the cover member, so that the cover member can be surely fixed and the appearance quality of the vicinity of the handlebar can be improved.

According to the invention described in claim 6, the cover member covers a part of the control force transmitting means extending from the operating lever, so that the appearance quality of the periphery of the operating lever can be improved.

According to the invention described in claim 7, even in the case of providing two or more and two or more kinds of second electric components, the appearance quality in the vicinity of the handlebar can be improved.

According to the invention described in claim 8, the operation signals for a horn, a headlight, a blinker and the like can be transmitted to the main harness. Here, the first electric component may be provided to perform other operations for an engine starter, an engine stop and the like in addition to the horn, the headlight and the blinker.

According to the invention described in claim 9, even if the handlebar is turned, it is possible to prevent the operability from being impaired by the sub-harness.

### [Brief Description of Drawings]

[Fig. 1] Fig. 1 is a left side view of a motorcycle according to an embodiment of the invention.
[Fig. 2] Fig. 2 is an exploded perspective view of a steering system of the motorcycle.
[Fig. 3] Fig. 3 is a perspective view of the configuration of the periphery of a brake lever of the motorcycle, taken obliquely from above.
[Fig. 4] Fig. 4,is a perspective view of the configuration of the periphery of the brake lever of the motorcycle, taken obliquely from the front.
[Fig. 5] Fig. 5 is a plan view schematically showing the configuration of the periphery of the brake lever of the motorcycle.

### [Description of Embodiments]

An embodiment of the invention will now be described according to the drawings. In the drawings used in the following, an arrow FR designates the front of a vehicle, an arrow UP designates the upside of the vehicle, and an arrow LH designates the left-hand side of the vehicle.

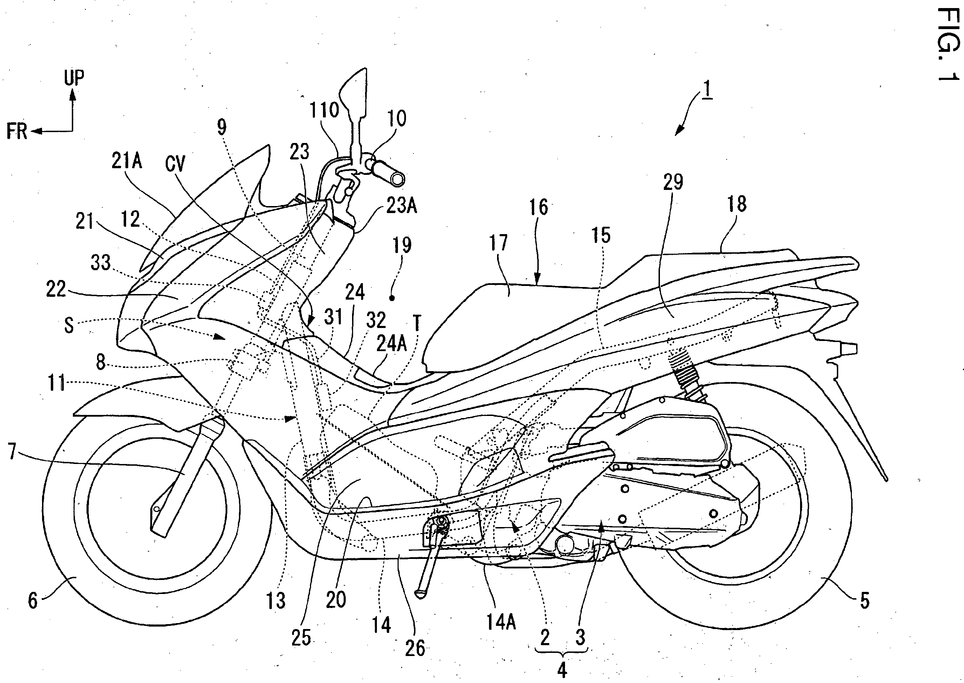

Fig. 1 shows a scooter type motorcycle (a saddle-ride type vehicle) 1 to which the embodiment of the invention is applied.

As shown in Fig. 1, the motorcycle 1 includes a swing unit 4 in which an engine 2 and a power transmission mechanism 3 are integrated with each other. The swing unit 4 rotatably supports a rear wheel 5 at the rear part thereof. A front wheel (a wheel) 6 constituting a steering system S is disposed in front of the swing unit 4.

The front wheel 6 is rotatably supported on the lower parts of a pair of right and left front forks 7, 7. A bridge 8 is erected at the upper parts of the right and left front forks 7, 7. A steering shaft 9 as a steering control shaft is erected at the center in the vehicle width direction in the bridge 8.

A handlebar pipe (a handlebar) 10 is provided above the steering shaft 9. The handlebar pipe 10 is formed by a single pipe material extending in the vehicle width direction.

The steering system S in the present embodiment is mainly constructed by the front wheel 6, the front forks 7, 7, the steering shaft 9, the handlebar pipe 10 and the like.

The steering shaft 9 is rotatably supported on a head pipe 12 provided at the front end of a body frame (a body) 11 with which a plurality of frame members are integrated by welding or the like.

The body frame 11 of the vehicle includes: the head pipe 12; a main frame 13 extending downward from the head pipe 12; a pair of right and left side frames 14, 14 connected to the lower side surface of the main frame 13 to extend backward, and then extending upwardly toward the rear; and a pair of right and left seat frames 15,15 connected to the upper ends of the side frames 14,14 and extending upwardly toward the rear.

The main frame 13 is inclined a little to the vertical direction to be exact, and extends downwardly to the rear from the head pipe 12.

The swing unit 4 is supported on the rear lower parts of the side frames 14, 14 through a link member 14A to be vertically swingable.

A seat 16 on which an occupant is seated is disposed above the swing unit 4. The seat 16 extends in the longitudinal direction, and a main seat 17 on which a rider is seated and a rear seat 18 on which a pillion passenger is seated are formed integrally with each other.

A motorcycle 1 is covered with a vehicle body cover CV constituted by a plurality of cover members formed of resin material. A front cover 21 is disposed as a part of the vehicle body cover CV above the front wheel 6 and in front of the head pipe 12. A pair of right and left L-shaped front side covers 22, 22 provided with corner parts disposed in the front as viewed in the side view are connected to the rear edges of both side parts of the front cover 21. The front side covers 22, 22 are formed in such a shape that the L-shaped sides thereof are connected to the rear edges of both side parts of the front cover 21 and the other sides are extended backward.

The front cover 21 is formed in such a streamline shape as to be tapered toward the front of the vehicle as viewed from the top, and the upper part thereof is provided with a screen 21A. The screen 21A is raised upwardly toward the rear extending from the front toward the rear in side view, and the travelling air from the front is caused to flow upwardly toward the rear by the screen 21A. Further, the front cover 21 integrally includes a front light and right and left blinkers.

The space between right and left rear parts of the front side covers 22, 22 is covered with an upper inner cover 23 and a lower inner cover 24 extending in the vehicle width direction.

The rear wall part of the upper inner cover 23 extends in the vertical direction along the steering shaft 9. The lower inner cover 24 is connected to the lower end of the rear wall part of the upper inner cover 23 to extend backward, and the rear end of the lower inner cover 24 leads to the position close in front of the front end of the seat 16.

A bulge portion 23A bulged toward the rear is formed in the central area in the vehicle width direction at the upside of the rear wall part of the upper inner cover 23. The bulge portion 23A is shaped arcuate along the outer peripheral surface of the steering shaft 9 outside in the radial direction of the steering shaft 9. A fuel tank T is disposed below the lower inner cover 24. A filler opening lid 24A for opening a filler opening not shown of the fuel tank T to the outside is provided to be opened and closed on the lower inner cover 24.

Here, a leg through space 19 for passing his leg when an occupant gets on and off is formed in front of the seat 16 and above the lower inner cover 24. A rider rides on the motorcycle 1 by passing his leg through the leg through space 19, sitting on the seat 16 and placing his feet on right and left step floors 20, 20 provided on the lower part of the center in the longitudinal direction of the vehicle body. Here, the step floors 20, 20 are integrally provided on a pair of right and left lower covers 25, 25 connected to the lower parts of the front side covers 22,22 to extend backward. The lower covers 25, 25 are extended above the swing unit 4.

Further, a pair of right and left under cowls 26, 26 are provided below the lower covers 25, 25. The space between the lower covers 25, 25 and the seat 16 is covered with a pair of right and left rear side covers 29, 29 extending backward with the front ends thereof connected to the rear ends of the front side covers 22,22.

A main harness 31 is wired along the main frame 13. The main harness 31 is electrically connected to electric components provided on the respective parts of the vehicle body, including an engine control unit (hereinafter referred to as ECU) 32, which is provided in the rear of the lower part of the main frame 13. The ECU 32 is a controller for controlling a fuel injection amount of an engine, for example, by acquiring information of various kinds of sensors loaded on the vehicle.

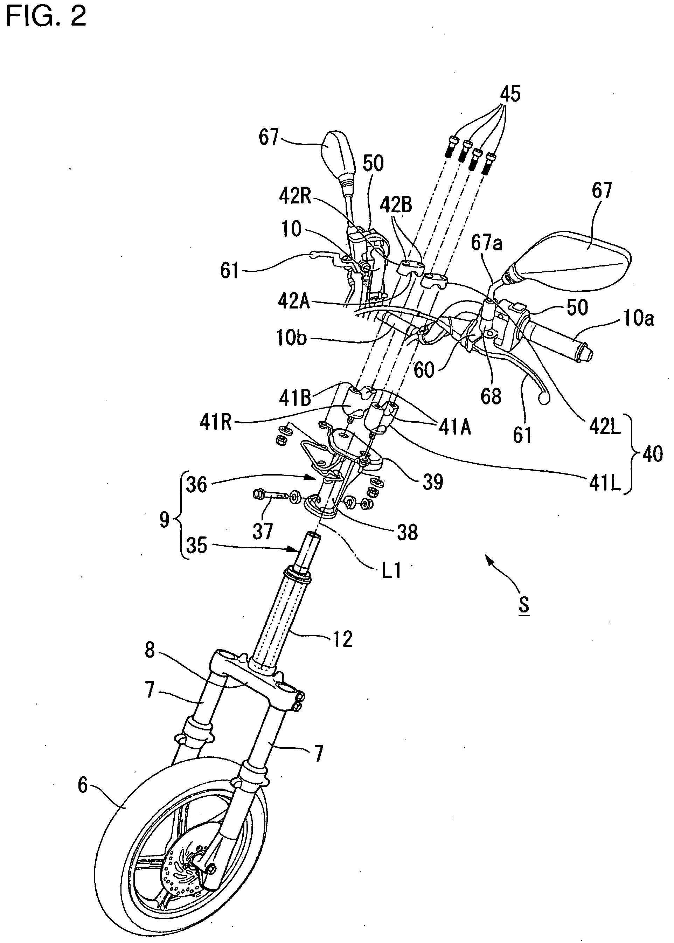

Fig. 2 is an exploded perspective view of the steering system S.

As shown in Fig. 2, the steering shaft 9 in the present embodiment includes: a shaft body 35 inserted in the head pipe 12 and rotatably supported; and a handlebar post 36 connected to the upper part of the shaft body 35 projected upward from the head pipe 12 in the shaft body 35. The handlebar post 36 includes: a cylinder part 38 where the upper part of the shaft body 35 is inserted in the inside and connected not to turn by,a bolt 37; and a rectangular stay part 39 connected to cover the upper end of the cylinder part 38 and extending to both sides in the vehicle width direction.

The handlebar pipe 10 is located to be exposed to the outside of the vehicle body cover CV, and fixed at the central part 10b in vehicle width direction (in the lateral direction) by a handlebar holder 40 fixed to the stay part 39. The handlebar holder 40 includes: a pair of right and left lower holders 41L, 41R fixed to the top face of the stay part 39 and projected upward; and a pair of right and left upper holders 42L, 42R abutted on the lower holders 41L, 41R from above for fixing the handlebar pipe 10, sandwiched between the upper holders and the lower holders 41L, 41R. The lower holders 41L, 41R and the upper holders 42L, 42R are disposed right and left across the steering axis L1 in the stay part 39.

The upper parts of the lower holders 41L, 41R are respectively provided with arcuate handlebar receiving parts 41A, 41A formed to be recessed downward to place the handlebar pipe 10, and also provided with bolt fastening holes 41B formed on both sides with the handlebar receiving parts 41A, 41A interposed between them. On the other hand, the lower parts of the upper holders 42L, 42R are provided with arcuate handlebar abutting parts 42A, 42A formed recessed upward to hold down the handlebar pipe 10, and also provided with through holes 42B formed on both sides across the handlebar abutting parts 42A, 42A to be aligned with the bolt fastening holes 41B.

In the upper holders 42L, 42R, with the central part 10b of the handlebar pipe 10 interposed between the handlebar abutting parts 42A, 42A and the handlebar receiving parts 41A, 41A of the lower holders 41L, 41R, bolts 45 are inserted into the through holes 42B and fastened to the bolt fastening holes 41B. Thus, the handlebar pipe 10 is fixed by the upper holders 42L, 42R and the lower holders 41L, 41R.

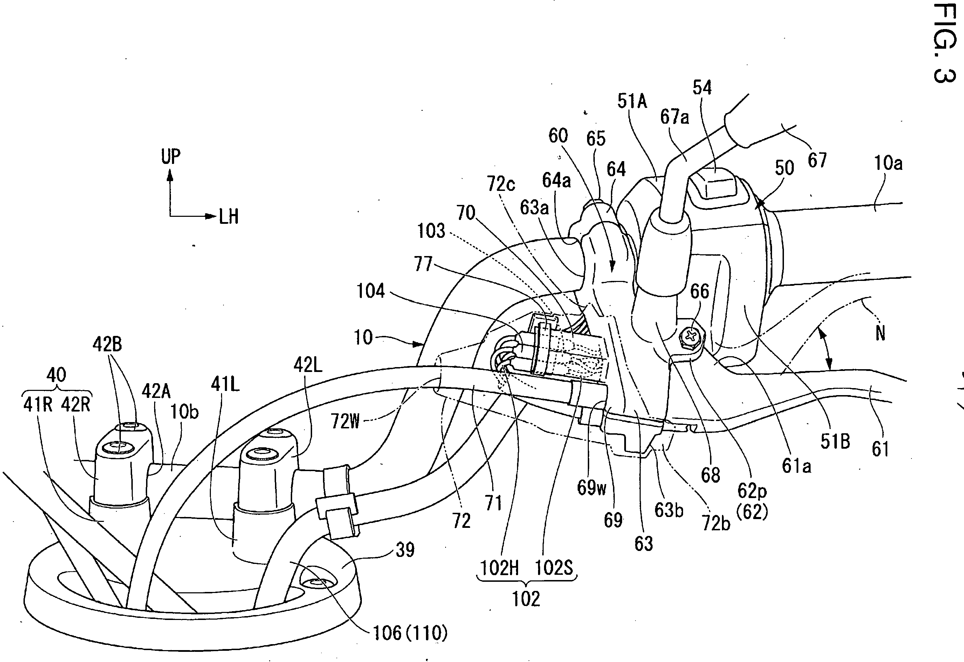

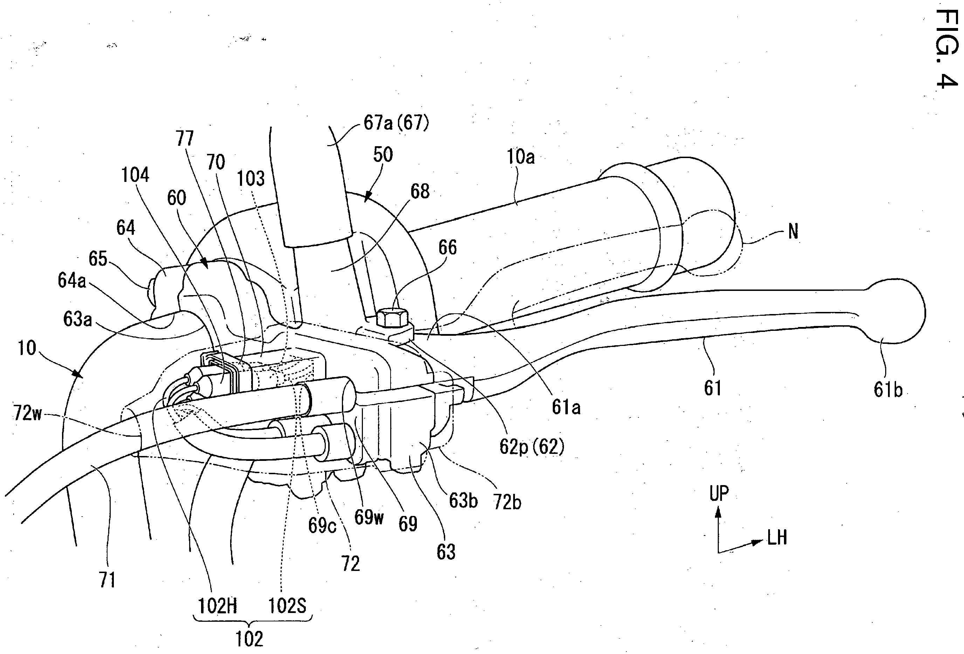

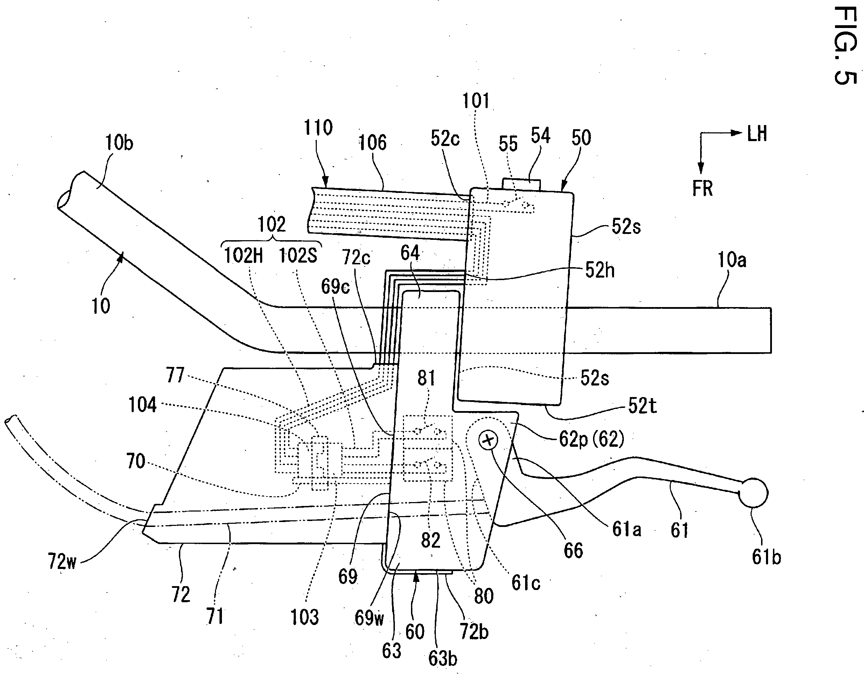

Fig. 3 is a perspective view of the configuration of the periphery of a brake lever of the motorcycle taken obliquely from above. Fig. 4 is a perspective view of the configuration of the brake lever of the motorcycle taken obliquely from the front. Fig. 5 is a plan view schematically showing the configuration of the periphery of the brake lever of the motorcycle.

As shown in Figs. 3 to 5, handlebar grip parts 10a to which a grip member is mounted are provided on both right and left sides of the handlebar pipe 10.

In the handlebar pipe 10, a switch box (an electric component, a first electric component) 50 is disposed at the side of the central part 10b with respect to the right and left handlebar grips 10a. In the handlebar pipe 10, a lever holder (a holder) 60 for supporting a brake lever (an operating lever) 61 is mounted at the side of the central part 10b with respect to the switch box 50.

The switch box 50 is mounted to the outer peripheral side of the handlebar pipe 10. The switch box 50 is divided into two divided bodies 51A, 51B divided back and forth into halves, for example. The divided bodies 51A, 51B are opposite to each other at a space in the axial direction of the handlebar pipe 10, and respectively constructed so that side wall parts 52s, 52s orthogonal to the outer peripheral surface of the handlebar pipe 10 and an outer peripheral wall part 52t formed at a space on the outer peripheral side of the handlebar pipe 10 and continuing in the circumferential direction of the handlebar pipe 10 to connect the side wall parts 52s, 52s to each other are integrally formed. The divided bodies 51A, 51B are respectively formed like a closed end having a recessed part (not shown) opened to the side facing the handlebar pipe 10 by the side wall parts 52s, 52s and the outer peripheral wall part 52t. The divided bodies 51A, 51B are fastened with the handlebar pipe 10 held between them by a fastening bolt not shown to be fixed to the handlebar pipe 10.

The outer peripheral wall part 52t of the thus constructed switch box 50 is provided with an operation switch 54 for operating blinkers, a headlight, a horn, a starter and the like by a rider. As shown in Fig. 5, a switching element 55, the electric connect and disconnect state (ON/OFF) of which is changed according to the operation of the operation switch 54, is stored fixedly to the side wall part 52s and the outer peripheral wall part 52t of the divided bodies 51A, 51B in the switch box 50. Here, in the present embodiment, as the operation switch 54, switches for operating the horn, operating to select a beam direction between a high beam and a low beam of the headlight, operating the blinkers, operating the engine starter, and operating to stop the engine may be provided.

One end of a first cable group 101 including a plurality of cables (wiring) is electrically connected to the switching element 55. The first cable group 101 is led through to the outside of the switch box 50 through a cable lead-through hole 52c formed on the side wall part 52s of the switch box 50, and the other end is connected to the main harness 31 through a coupler 33 shown in Fig. 1.

A lever holder 60 includes: a holder body 63 having a lever supporting part 62 for rotatably supporting the base end part of a brake lever 61; and a fixing member 64 opposite to the holder body 63 with the handlebar pipe 10 held between them.

A handlebar receiving part 63a semi-spherical in section along the outer peripheral surface of the handlebar pipe 10 and bolt fastening holes not shown, which are formed on both sides across the handlebar receiving part 63a, are formed on the holder body 63. A handlebar receiving part 64a semi-spherical in section along the outer peripheral surface of the handlebar pipe 10 and through holes not shown, which are formed on both sides across the handlebar receiving part 64a, are formed on the fixing member 64. The lever holder 60 and the fixing member 64 are fixed to the handlebar pipe 10 with the handlebar pipe 10 held between the handlebar receiving parts 63a, 64a by fastening a fastening bolt 65 to a bolt fastening hole through a through hole.

The lever support part 62 is constructed by a pair of plate parts 62p, 62p formed at a space parallel to each other to hold the base 61a of the brake lever 61 in the thickness direction. A through hole not shown is formed on one of the plate parts 62p, 62p, and a bolt fastening hole not shown is formed on the other of the plate parts 62p, 62p.

On the other hand, the base 61a of the brake lever 61 is provided with a pivot hole not shown, which is formed to penetrate in the thickness direction.

To the above described lever support part 62, the base 61a of the brake lever 61 is inserted between the plate parts 62p, 62p of the lever support part 62, and a pivot screw 66 is fastened to the bolt fastening hole through the through hole and the pivot hole. Thus, the brake lever 61 is supported to rotate around the pivot screw 66. A nut may be used separately instead of the bolt fastening hole.

Mirror fastening bosses 68 for fastening mirror stays 67a of right and left back mirrors 67 are integrally formed on the lever holders 60.

In the lever holder 60, a plate part 69 orthogonal to the plate parts 62p, 62p is formed on the center side in the width direction of the handlebar pipe 10 (at the side of the central part 10b, on the opposite side to the brake lever 61) with respect to the lever support part 62.

The plate part 69 is provided with a bracket 70 projected toward the center side in the width direction of the handlebar pipe 10 substantially orthogonally to the plate part 69. The bracket 70 may be formed integral with the lever holder 60, and for example, it may be L-shaped and fixed to the plate part 69 by a bolt or the like not shown.

Further, a wire penetration hole 69w which a brake wire (an operation wire) 71, one end of which is connected to the brake lever 61, penetrates is formed in the plate part 69 of the lever holder 60. The brake wire 71 is led through to the outside of the lever holder 60 through the wire penetration hole 69w.

The lever holder 60 is provided with a brake sensor (an electric component, a second electric component) 80 for detecting the operating state of the brake lever 61 in a space surrounded by the plate parts 62p, 62p and the plate part 69.

The brake sensor 80 is provided with two sensor elements 81, 82. Here, the sensor elements 81, 82 individually detect the condition that the brake lever 61 is not operated (the condition that the tip part 61b of the brake lever 61 is put at a position largely spaced from the handlebar pipe 10), or the condition that the brake lever 61 is operated (the condition that the tip part 61b of the brake lever 61 is put at a position close to the side of the handlebar pipe 10; the condition indicated by a two-dot chain line N in Fig. 3 and Fig. 4). Therefore, in the sensor elements 81, 82, a part moving nearer to and separate from the sensor elements 81, 82 when the brake lever 61 is operated to turn about a pivot screw 66, e.g., a position 61c offset from the pivot screw 66 in the brake lever 61 abuts on the sensor elements, thereby switching the detecting condition (ON/OFF).

In the present embodiment, one sensor element 81 out of the sensor elements 81, 82 turns on the brake lamp, for example, to detect whether or not the brake lever 61 is operated. The other sensor element 82 detects whether or not a rear wheel 5 is locked by a rear brake through the operation of the brake lever 61 when the brake lever 61 is operated when an engine is started, for example.

One end of a second cable group 102 including a plurality cables (wiring) is electrically connected to the sensor elements 81, 82. The second cable group 102 is led through to the outside of the lever holder 60 through a cable lead-through hole 69c formed in the plate part 69 of the lever holder 60, and the other end is connected to the main harness 31 through the coupler 33.

The second cable group 102 has such a configuration that a sensor side cable group 102S at the side of the brake sensor 80 and a harness side cable group 102H at the side of the main harness 31 are removably connected to each other through coupling connectors (connectors) 103, 104.

A coupling connector 103 such as a bullet terminal, a multi-pole coupler and the like is connected to the other end of the sensor side cable group 102s.

One end of the harness side cable group 102H is provided with the coupling connector 104 connected to the coupling connector 103. The coupler 33 shown in Fig. 1 is connected to the other end of the harness side cable group 102H.

The coupling connectors 103, 104 of Fig. 3 and Fig. 4 are bullet terminals which are respectively formed in a pair of one for a positive electrode and one for the ground, and the coupling connectors 103, 104 are provided on the sensor elements 81, 82, respectively, so that four pairs of bullet terminals in total are provided. As shown in Fig. 5, a single coupler may connect a plurality of electrodes.

Here, the coupling connectors 103, 104 are put together by a cable tie 77 or the like and locked on the bracket 70, with the corresponding connectors connected to each other.

Further, a cover member 72 formed of a rubber-based material or the like is fixed to the holder body 63 of the lever holder 60 for the purpose of water-proofing and dust-proofing. In the interior of the cover member 72, the brake wire 71 led through to the outside of the lever holder 60 through the wire penetration hole 69w is passed, and the brake wire 71 is led through to the outside through a penetration hole 72w formed in the cover member 72, passed in front of the steering shaft 9, and connected to a braking device of the rear wheel 5, for example.

The cover member 72 is shaped substantially like a triangle taking the penetration hole 72w as the apex and a part laid along the plate part 69 of the holder body 63 as the base. A fixing piece 72b extending along a cover fixing part 63b of the front of the holder body 63 is formed on the front of the cover member 72. The cover member 72 is fixed to the cover fixing part 63b by fastening or the like at the fixing piece 72b.

The bracket 70 and the coupling connectors 103, 104 are also stored in the cover member 72. The harness side cable group 102H, one end of which is connected to the coupling connector 103, is passed through the interior of the cover member 72, and led through to the outside through a penetration hole 72c formed in the cover member 72.

The harness side cable group 102H led through to the outside from the cover member 72 crosses the handlebar pipe 10 in the front-rear direction to be introduced into the switch box 50 through a cable introduction hole 52h formed in the sidewall part 52s of the rear of the switch box 50. Further, the harness side cable group 102H is led through together with the first cable group 101 to the outside of the switch box 50 through the cable lead-through hole 52c.

The first cable group 101 and the harness side cable group 102H led through to the outside of the switch box 50 are inserted into a tubular protective member 106. Here, the base end of the protective member 106 enters the inside of the switch box 50, and the first cable group 101 and the harness side cable group 102H are inserted into the protective member 106 in the interior of the switch box 50. The first cable group 101, the harness side cable group 102H and the protective member 106 constitute a sub-harness 110.

As shown in Fig. 1 and Fig. 3, the sub-harness 110 is wired to direct toward the central part 10b along the handlebar pipe 10 and pass the vicinity of the steering shaft 9.

At the other end of the sub-harness 110, the first cable group 101 and the harness side cable group 102H are electrically connected to the main harness 31 through the coupler 33.

As described above, the first cable group 101 of the switch box 50 mounted to the handlebar pipe 10 and the second cable group 102 of the brake sensor 80 held on the handlebar pipe 10 through the bracket 70 are inserted into the tubular protective member 106, thereby constituting the sub-harness 110 extending from the switch box 50 and the brake sensor 80 as the plurality of electric components to the main harness 31, and the first cable group 101 and the second cable group 102 are connected to the main harness 31 through the removable coupler 33.

The first cable group 101 and the second cable group 102 are thus inserted into one protective member 106 to be put together into one sub-harness 110, whereby the appearance quality of the vicinity of the handlebar pipe 10 can be improved, and also the assembling efficiency and the maintainability can be improved. Further, the number of the protective members 106 can be reduced so as to lower the cost.

In the second cable group 102, the sensor side cable group 102S at the side of the brake sensor 80 and the harness side cable group 102H at the side of the main harness 31 are connected to each other through the removable connectors 103, 104. Thus, the sensor side cable group 102S can be detached from the harness side cable group 102H connected to the main harness 31 by releasing the fitting of the connectors 103, 104. Therefore, in replacement or maintenance of the brake sensor 80, the brake sensor 80 and the harness side cable group 102H can be easily detached from the vehicle body frame 11 so that the maintainability can be improved.

Further, the connectors 103, 104 of the sensor side cable group 102S and the connectors 103, 104 of the harness side cable group 102H are held in the connecting state on the bracket 70. Thus, the connectors 103, 104 are surely held and also the second cable group 102 can be positioned in the middle. In this point as well, the appearance quality of the vicinity of the handlebar pipe 10 can be improved.

In addition, the cover member 72 for covering at least the sensor side cable group 102S, a part of the harness side cable group 102H, the connectors 103, 104 and the bracket 70 is further provided. Thus, the waterproofness and the dust resistance at the connecting parts of the connectors 103,104 can be enhanced, and also the appearance quality can be improved.

The lever holder 60 includes the cover fixing part 63b for fixing the cover member 72. Thus, the cover member 72 is surely fixed, and the appearance quality of the vicinity of the handlebar pipe 10 can be improved.

Further, the handlebar pipe 10 is provided with the lever holder 60 which supports the brake lever 61 and includes the bracket 70, and the cover member 72 is provided to cover a part of the brake wire 71 extending from the brake lever 61 supported on the lever holder 60. Thus, the appearance quality of the periphery of the brake lever 61 can be improved.

In addition, the second cable group 102 is passed through the interior of the switch box 50, and inserted from the interior of the switch box 50 along the first cable group 101 into the protection member 106. Thus, the routing of the second cable group 102 can be made orderly and the number of cables exposed to the vicinity of the handlebar pipe 10 can be decreased so as to improve the appearance quality.

The switch box 50 includes the operation switch 54 operated from the outside, and the brake sensor 80 includes the sensor elements 81, 82 for detecting the vehicle condition. Thus, the operation signal of the operation switch 54 and the detection signals of the sensor elements 81,82 can be transmitted to the main harness 31.

Further, the switch box 50 includes, as the operation switch 54, at least switches for operating the horn, operating to switch a beam direction of the headlight, and operating the blinker. Thus, the operation signals for the horn, the headlight, the blinker and the like can be transmitted to the main harness 31. Here, the first electric component may be provided to perform the other operation for the engine starter, engine stop and the like in addition to the horn, the headlight and the blinker.

In addition, the handlebar pipe 10 is fitted to the steering shaft 9 for steering the front wheel 6, and the sub-harness 110, passing the vicinity of the steering shaft 9, is connected to the main harness 31. Thus, even if the handlebar pipe 10 is turned, it is possible to prevent the operability from being impaired by the sub-harness 10. The operability in turning can be improved on the point that the sub-harness 110 is put together into one as well.

The present invention is not limited to the respective embodiments described above with reference to the drawings, but various modifications may be considered in the technical range.

For example, the switch box 50 and the brake sensor 80 are cited as the electric components, but it is not limited thereto. Providing that it is disposed in the vicinity of the handlebar pipe 10, for example, a navigation device, a cellular phone terminal (a smart phone), a portable music reproducing device, ETC (Electronic Toll Collection System) terminal and the like are taken as the electric component (the second electric component), and the invention may be applied thereto. In this case, the second electric components and the second cable groups 102 thereof are provided in two or more pairs (two or more kinds). Thus, even when two or more second electric components are provided, the appearance quality in the vicinity of the handlebar pipe 10 can be improved by application of the invention. Here, the plurality of second electric components may be different from each other in kind and mounting position in the vicinity of the handlebar pipe 10.

Although the invention is applied to a part including the brake bar 61 for the rear brake at the handlebar pipe 10 in the embodiment, the invention may be applied to other parts such as a part including a brake lever for the front brake, a part including a clutch lever for a clutch and the like.

In addition, although the brake wire 71 is illustrated as the control force transmitting means, a structure including a hydraulic pressure hose or the like may be adopted as control force transmitting means taking the place of the brake wire 71.

Further, although the handlebar pipe 10 is provided as the handlebar in the above embodiment, the present invention may be similarly applied to a so-called clip-on type handlebar in which a handlebar is mounted to each of a pair of front forks instead of the handlebar pipe 10.

The saddle-ride type vehicle includes vehicles in general in which a rider rides straddling a vehicle body, includes not only a motorcycle (including a bicycle with a motor and a scooter-type vehicle), but also three-wheeled vehicles (including vehicles with one front wheel and two rear wheels, and also ones with two front wheels and one rear wheel) or four-wheeled vehicles and includes the vehicle with a motor including an electric motor as well.

### [Reference Signs List]

- 1 ...: Motorcycle (saddle-ride type vehicle)
- 6 ...: Front wheel (wheel)
- 9 ...: Steering shaft
- 10...: Handlebar pipe (handlebar)
- 11 ...: Body frame (body)
- 31...: Main harness
- 50 ...: Switch box (electric component, first electric component)
- 54 ...: Operation switch
- 60 ...: Lever holder (holder)
- 61...: Brake lever (operating lever)
- 63b ...: Cover fixing part
- 70 ...: Bracket
- 71...: Brake wire (control force transmitting means)
- 72 ...: Cover member
- 80 ...: Brake sensor (electric component, second electric component)
- 81, 82 ...: Sensor element (detection sensor)
- 101...: First cable group
- 102 ...: Second cable group
- 102H ...: Harness side cable group
- 102S ...: Sensor side cable group (electric component side cable group)
- 103,104...: Coupling connector (connector)
- 106 ...: Protective member
- 110...: Sub-harness

## Claims

1. A cable wiring structure for a saddle-ride type vehicle (1) in which a plurality of electric components (50, 80) are mounted to a handlebar (10),
wherein the cable wiring structure includes :
a main harness (31) to be fitted to a vehicle body (11);
a first electric component (50) to be mounted to the handlebar (10);
a first cable group (101), one end of which is connected to the first electric component (50) and the other end of which is connected to the main harness (31);
a second electric component (80) to be mounted to the handlebar (10);
a holder (60) to be fixed to the handlebar (10) and supporting the second electric component (80);
a second cable group (102), one end of which is connected to the second electric component (80) and the other end of which is connected to the main harness (31); and
a tubular protective member (106) into which the first cable group (101) and the second cable group (102) are inserted,
a sub-harness (110) being constituted by the first cable group (101), the second cable group (102), and the protective member (106), and
the second cable group (102) being passed through the interior of the first electric component (50) and inserted into the protective member (106) along the first cable group (101).
wherein the first electric component (50) includes an operation switch (54) operated from the outside, and
the second electric component (80) includes detection sensors (81, 82) for detecting the vehicle condition.

2. The cable wiring structure according to claim 1, wherein in the second cable group (102), the electric component side cable group (102S) at the side of the second electric component (80) and a harness side cable side (102H) at the side of the main harness (31) are connected to each other through removable connectors (103, 104).

3. The cable wiring structure according to claim 2, wherein the connectors (103, 104) are held on a bracket (70) provided on the holder (60).

4. The cable wiring structure according to claim 3, further comprising: a cover member (72) which at least covers the connectors (103, 104), at least a part of the second cable group (102), and the bracket (70).

5. The cable wiring structure according to claim 4, wherein the holder (60) includes a cover fixing part (63b) for fixing the cover member (72).

6. The cable wiring structure according to claim 4 or 5,
wherein an operating lever (61) is supported on the holder (60), and
the cover member (72) covers at least a part of control force transmitting means (71) extending from the operating lever (61) side to transmit the lever control force to the outside.

7. The cable wiring structure according to any one of claims 1 to 6, wherein the second electric component (80) and the second cable group (102) are provided in two or more pairs.

8. The cable wiring structure according to claim 7, wherein the first electric component (50) includes the operation switch (54) at least for operating a horn, switching the beam direction of a headlight, and operating a blinker.

9. A saddle-ride type vehicle with a cable wiring structure according to any one of claims 1 to 8,
wherein the handlebar (10) is fitted to a steering shaft (9) for steering a wheel (6), and
the sub-harness (110) is connected to the main harness (31) through the vicinity of the steering shaft (9).

## Patentansprüche

1. Verkabelungsstruktur für ein Fahrzeug (1) vom Sattelfahrt-Typ, in welchem eine Mehrzahl von elektrischen Komponenten (50,80) an einem Lenker (10) befestigt sind,
wobei die Verkabelungsstruktur umfasst:
einen Hauptkabelbaum (31), zur Befestigung im
Fahrzeugkörper (11);
eine erste elektrische Komponente (50) zur Anbringung an dem Lenker (10);
eine erste Kabelgruppe (101), deren eines Ende mit der ersten elektrischen Komponente (50) verbunden und deren anderes Ende mit dem Hauptkabelbaum (31) verbunden ist;
eine zweite elektrische Komponente (80) zur Anbringung an dem Lenker (10);
eine Halterung (60) zur Fixierung an dem Lenker (10), die die zweite elektrische Komponente (80) stützt;
eine zweite Kabelgruppe (102), deren eines Ende mit der zweiten elektrischen Komponente (80) verbunden und deren anderes Ende mit dem Hauptkabelbaum (31) verbunden ist; und
ein röhrenförmiges schützendes Teil (106), in welches die erste Kabelgruppe (101) und die zweite Kabelgruppe (102) eingesetzt sind,
einen Sub-Kabelbaum (110), der durch die erste Kabelgruppe (101), die zweite Kabelgruppe (102), und das schützende Teil (106) gebildet ist, und
wobei die zweite Kabelgruppe durch das Innere der ersten elektrischen Komponente (50) geführt und in das schützende Teil (106) entlang der ersten Kabelgruppe (101) eingesetzt ist,
wobei die erste elektrische Komponente (50) einen von außen betriebenen Betriebsschalter (54) umfasst, und
die zweite elektrische Komponente (80) Erfassungssensoren (81, 82) zum Erfassen des Fahrzeugzustands umfasst.

2. Verkabelungsstruktur nach Anspruch 1, wobei in der zweiten Kabelgruppe (102) die Elektrische-Komponente-Seitenkabelgruppe (102S) an der Seite der zweiten elektrischen Komponente (80) und eine Kabelbaumseitenkabelseite (102H) an der Seite des Hauptkabelbaums (31) miteinander durch entfernbare Stecker (103,104) verbunden sind.

3. Verkabelungsstruktur nach Anspruch 2, wobei die Stecker (103,104) von einer Klammer (70) gehalten werden, die auf der Halterung (60) bereitgestellt ist.

4. Verkabelungsstruktur nach Anspruch 3, ferner umfassend: ein Bedeckungsteil (72), das mindestens die Stecker (103,104), mindestens einen Teil der zweiten Kabelgruppe (102), und die Klammer (70) bedeckt.

5. Verkabelungsstruktur nach Anspruch 4, wobei die Halterung (60) einen Bedeckungsbefestigungteil (63b) zum Fixieren des Bedeckungsteils (72) umfasst.

6. Verkabelungsstruktur nach Anspruch 4 oder 5, wobei
ein Betriebshebel (61) auf die Halterung (60) gestützt ist, und
das Bedeckungsteil (72) mindestens einen Teil des Kontrollkraftübertragungsmittels (71) bedeckt, welches sich von der Seite des Betriebshebels (61) aus erstreckt, um die Hebelkontrollkraft nach außen zu übertragen.

7. Verkabelungsstruktur nach einem der Ansprüche 1 bis 6, wobei die zweite elektrische Komponente (80) und die zweite Kabelgruppe (102) in zwei oder mehreren Paaren bereitgestellt sind.

8. Verkabelungsstruktur nach Anspruch 7, wobei die erste elektrische Komponente (50) den Betriebsschalter (54) mindestens zum Betreiben einer Hupe, Wechseln der Strahlrichtung eines Scheinwerfers, und Betreiben eines Blinkers umfasst.

9. Fahrzeug vom Sattelfahrt-Typ mit einer Verkabelungsstruktur nach einem der Ansprüche 1 bis 8,
wobei der Lenker (10) an einer Lenkwelle (9) zum Lenken eines Rads (6) befestigt ist, und
der Sub-Kabelbaum (110) mit dem Hauptkabelbaum (31) durch die Nähe der Lenkwelle (9) verbunden ist.

## Revendications

1. Structure de câblage destinée à un véhicule à selle (1) dans laquelle plusieurs composants électriques (50, 80) sont montés sur un guidon (10),
la structure de câblage comprenant :
un faisceau principal (31) fixé sur le corps du véhicule (11) ;
un premier composant électrique (50) monté sur le guidon (10) ;
un premier groupe de câbles (101), dont une extrémité est reliée au premier composant électrique (50), et l'autre extrémité est reliée au faisceau principal (31) ;
un second composant électrique (80) monté sur le guidon (10) ;
un support (60) fixé sur le guidon (10) et qui supporte le second composant électrique (80) ;
un second groupe de câbles (101), dont une extrémité est reliée au second composant électrique (80), et l'autre extrémité est reliée au faisceau principal (31) ; et
un élément de protection tubulaire (106) dans lequel le premier groupe de câbles (101) et le second groupe de câbles (102) sont insérés,
un sous-faisceau (110) qui est constitué du premier groupe de câbles (101), du second groupe de câbles (102), et de l'élément de protection (106), et
le second groupe de câbles (102) passant à l'intérieur du premier composant électrique (50) et étant inséré dans l'élément de protection (106) le long du premier groupe de câbles (101),
dans laquelle le premier composant électrique (50) comprend un interrupteur (54) actionné depuis l'extérieur, et
le second composant électrique (80) comprend des détecteurs (81, 82) destinés à détecter l'état du véhicule.

2. Structure de câblage selon la revendication 1, dans laquelle, dans le second groupe de câbles (102), le groupe de câbles côté composant électrique (102S) du côté du second composant électrique (80), et un côté câble côté faisceau (102H) du côté du faisceau principal (31) sont reliés l'un à l'autre par le biais de connecteurs amovibles (103, 104).

3. Structure de câblage selon la revendication 2, dans laquelle les connecteurs (103, 104) sont supportés sur une patte de fixation (70) prévue sur le support (60).

4. Structure de câblage selon la revendication 3, qui comprend en outre : un élément de capot (72) qui recouvre au moins les connecteurs (103, 104), au moins une partie du second groupe de câbles (102), et la patte de fixation (70).

5. Structure de câblage selon la revendication 4, dans laquelle le support (60) comprend une partie de fixation de capot (63b) destinée à fixer l'élément de capot (72).

6. Structure de câblage selon la revendication 4 ou 5, dans laquelle un levier d'actionnement (61) est supporté sur le support (60), et l'élément de capot (72) recouvre au moins une partie d'un moyen de transmission de force de commande (71) qui s'étend depuis le levier d'actionnement (61) afin de transmettre la force de commande du levier vers l'extérieur.

7. Structure de câblage selon l'une quelconque des revendications 1 à 6, dans laquelle le second composant électrique (80) et le second groupe de câbles (102) sont prévus dans deux paires ou plus.

8. Structure de câblage selon la revendication 7, dans laquelle le premier composant électrique (50) comprend l'interrupteur (54) au moins pour actionner un avertisseur sonore, changer la direction du faisceau d'un phare, et déclencher un clignotant.

9. Véhicule à selle muni d'une structure de câblage selon l'une quelconque des revendications 1 à 8,
dans laquelle le guidon (10) est fixé sur un arbre de direction (9) destiné à orienter une roue (6), et
le sous-faisceau (110) est relié au faisceau principal (31) par la proximité de l'arbre de direction (9).
